# FASCICULE DE BREVET EUROPEEN

(11) **EP 2 819 880 B1**
(45) Date de publication et mention de la délivrance du brevet: **05.10.2016**
(21) Numéro de dépôt: 13712841.9
(22) Date de dépôt: 25.02.2013
(51) Int. Cl.: B60N 2/005, B60N 2/01, B60N 2/30, B60N 2/68

(54) **BANQUETTE POUR VEHICULE**
SITZ FÜR EIN FAHRZEUG
SEAT FOR A VEHICLE

(30) Priorité: 01.03.2012 FR 1251883
(43) Date de publication de la demande: 07.01.2015
(73) Titulaire: Peugeot Citroën Automobiles SA, 78140 Vélizy Villacoublay (FR)
(72) Inventeur: REBEL, Vincent, 75010 Paris (FR); CARRIER, Sebastien, 78310 Maurepas (FR); ROUSSEAU, Frederic, 91410 Dourdan (FR); HAYAT, David, 78770 Auteuil (FR)
(86) Numéro de dépôt international: PCT/FR2013/050380
(87) Numéro de publication internationale: WO 2013/128105

(56) Documents cités:
- WO-A1-2012/007689
- FR-A1- 2 914 597

## Description

La présente invention concerne de manière générale une banquette pour véhicule comprenant une première assise et une seconde assise adjacentes apte à libérer un espace de chargement sous ces assises.

Il est connu dans l'art antérieur des moyens d'assise et plus particulièrement des sièges ou des banquettes pour véhicule qui sont aptes à être escamotés afin de libérer un espace de chargement sous leur assise. De manière générale, il est connu des sièges dont l'assise peut être rabattue contre le dossier afin de libérer un espace de chargement sous le siège. Cependant, l'espace libéré par ce type de siège est limité par la taille du siège et plus particulièrement par la taille de son assise.

Le document US 2002/0130542 décrit une banquette arrière située dans un habitacle dont l'assise peut être rabattue contre le dossier de sorte à libérer un espace de chargement devant la banquette. Un problème de cette banquette est qu'elle ne permet pas de libérer un espace sous son assise de sorte qu'elle ne peut pas être utilisée avec des charges longues dépassant d'un compartiment arrière de chargement dans l'habitacle.

Le document FR 2962700 décrit également un siège proposant un espace libéré sous l'assise et comprenant des piètements avant reliés par un panneau de protection afin de protéger les éléments devant l'assise, tels que les pieds d'un occupant ou une planche de bord, des charges disposées sous le siège. Un premier inconvénient de ce siège vient de ce que l'espace libéré sous son assise est limité par les piètements de son assise et que cet espace est donc également limité par la taille de ladite assise. De plus, l'assise, lorsqu'elle est rabattue, ne procure alors plus de protection contre le ripage des éléments devant le siège car le panneau de protection est escamoté avec l'assise.

On connait également du document WO2012/007689, une banquette conforme au préambule de la revendication 1, ne disposant pas de piétement central avant.

Un but de la présente invention est de répondre aux inconvénients des documents de l'art antérieur mentionnés ci-dessus et en particulier, tout d'abord, de proposer une banquette pour véhicule capable de libérer un grand espace de chargement sous son assise tout en gardant sa fiabilité

Pour cela un premier aspect de l'invention concerne une banquette pour véhicule conforme à la partie caractérisante de la revendication 1. Ainsi, un élément chargé dans l'espace de chargement peut être à la fois situé sous la surface de la seconde assise et sous la surface au moins partielle de la première assise tout en étant bloqué par le premier piétement central avant pour éviter le ripage contre des éléments situés devant le siège même lorsque la seconde assise est rabattue.

De manière avantageuse, le piétement central arrière décalé est relié au premier piétement central avant par une première paroi de protection. De cette manière, les éléments adjacents à la banquette sont protégés contre le ripage.

Une réalisation particulièrement intéressante consiste en ce que la première paroi de protection a la forme d'un L renversé. Ceci permet d'optimiser l'espace de chargement sous la banquette.

Avantageusement, la première paroi de protection est composée de plusieurs parties et/ou est liée au plancher et/ou directement à la banquette.. Ainsi, la modularité de la paroi de protection est améliorée, et la résistance aux efforts des ceintures de sécurité peut encore être améliorée.

Une réalisation particulièrement intéressante consiste en ce que le piétement central arrière est décalé d'une distance telle qu'elle permet à un passager arrière de glisser un pied de chaque côté du piétement central arrière de telle sorte que ses pieds puissent rester sous la première assise. De cette manière, lorsque le véhicule ne sert à pas charger des objets volumineux, il peut être utilisé pour transporter des personnes à l'arrière dans le plus grand confort.

Avantageusement, la banquette comprend en outre un second piètement central avant situé sous le coin intérieur avant de ladite seconde assise, un second piètement latéral avant situé sous le coin extérieur avant de ladite seconde assise et un piètement latéral arrière situé sur le coin arrière extérieur de ladite seconde assise et la seconde assise est apte à être rabattue contre son dossier de sorte que lorsque la seconde assise est en position rabattue, lesdits piètements avant situés sous la seconde assise sont escamotés contre une surface inférieure de ladite seconde assise. Ainsi, la banquette permet également de libérer un chargement devant l'une de ses assises.

Avantageusement, les piètements avant de la seconde assise sont reliés par une seconde paroi de protection. Ainsi, les éléments devant la banquette tels qu'une planche de bord sont protégés des mouvements/chocs de charge d'arrière en avant.

Une réalisation particulièrement intéressante consiste en ce que la première assise est une assise intérieure de la banquette et la seconde assise est une assise extérieure de la banquette. Ainsi, l'espace libéré sous le siège est principalement situé sur le côté du véhicule de manière à ne pas gêner d'éventuelles installations au centre du véhicule telles qu'un frein à main, par exemple, ainsi qu'à rendre le chargement plus facile des objets par les ouvrants latéraux du véhicule.

Un autre aspect de l'invention concerne un véhicule comprenant une banquette selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- La figure 1 représente un habitacle de véhicule avec une banquette selon le premier aspect de l'invention, en position d'assise ;
- la figure 2 représente l'habitacle de la figure 1 avec une banquette dont une assise est en position escamotée ;
- la figure 3 représente la banquette selon le premier aspect de l'invention vue de haut ;

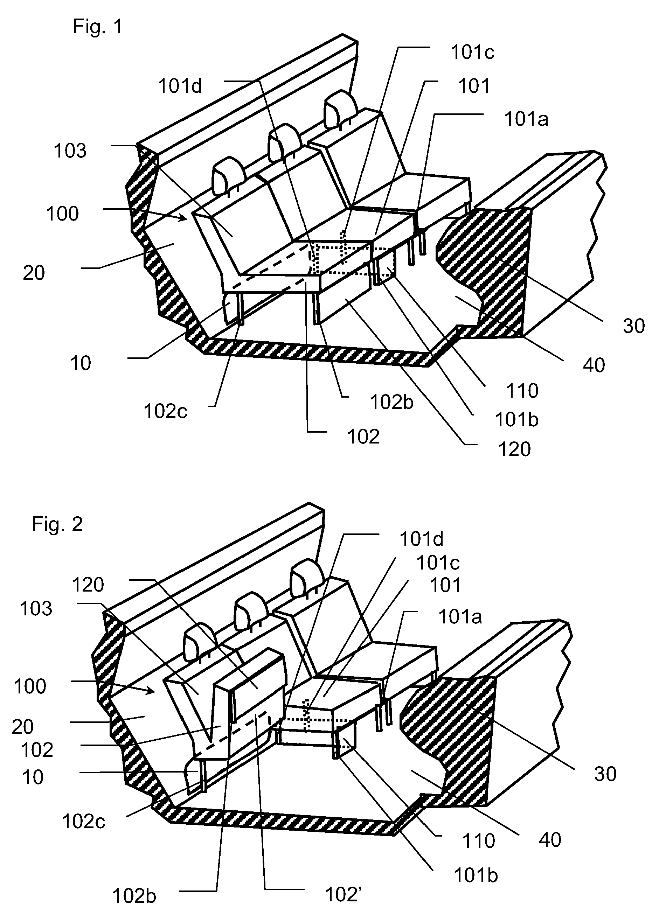

La figure 1 représente, dans cet exemple, un habitacle de véhicule de type véhicule utilitaire "fourgon" avec une banquette 100 séparée d'un espace de chargement arrière du véhicule par une cloison d'arrêt de charge 20. La banquette 100 est agencée derrière une planche de bord 30, sur le plancher 40. Une ouverture de communication 10 entre l'habitacle et l'espace de chargement arrière est agencée dans la cloison d'arrêt de charge 20, derrière la banquette 100, ici représentée en position normale d'utilisation pour un occupant de l'habitacle. La banquette 100 comprend une première assise 101 et une seconde assise 102 adjacentes et est montée sur le plancher au moyen d'une pluralité de piétements 101a-101d, 102a-102c situés sous la première assise 101 et la seconde assise 102.

Comme il apparaitra plus clairement plus tard, les piétements 101 a, 101 b et 101c sont situés sous les coins avant gauche, avant droit et arrière gauche de la première assise, respectivement, alors que les piétements 102a, 102b et 102c sont situés sous les coins avant gauche, avant droit et arrière droite de la seconde assise, respectivement. En plus de ces six piétements, la banquette comprend un piètement central arrière 101 d servant de résistance aux efforts de ceinture de sécurité dont un point d'attache (non représenté) se situe de préférence entre les deux assises.

La figure 2 représente l'habitacle de la figure 1 avec la seconde assise 102 rabattue contre le dossier 103 de la banquette et les piétements avant de la seconde assise 102a et 102b rabattus contre une surface inférieure 102' de la seconde assise 2 pour permettre de transporter des objets encombrants dans l'habitacle, tels que des charges longues qui peuvent dépasser par l'ouverture de communication 10, par exemple.

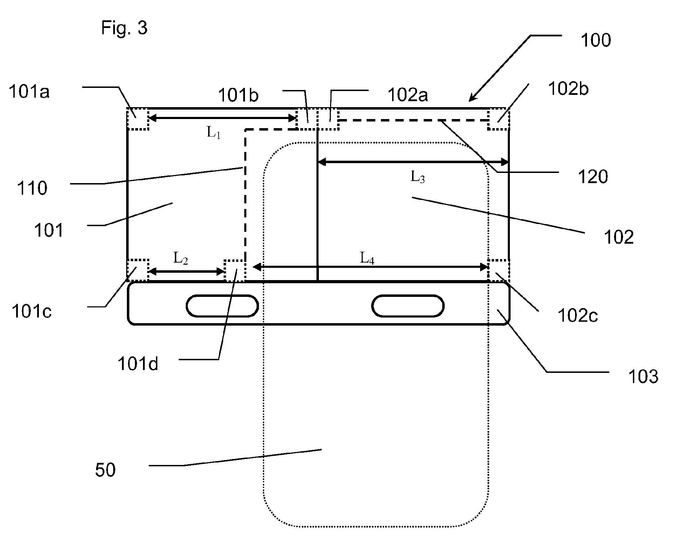

La figure 3 représente la banquette 100 vue de haut comprenant un dossier 103, une première assise 101 et une seconde assise 102. De préférence, les deux assises sont adjacentes et ont une largeur L₃ essentiellement identique, bien que cela ne soit pas indispensable. La banquette 100 est montée sur le plancher (non représenté) au moyen d'une pluralité de piètements 101a-101d et 102a-102c. Plus particulièrement, la banquette 100 comprend deux piètements latéraux avant 101a et 102b situés respectivement sous la première et la seconde assise 101, 102 et deux piètements latéraux arrière 101c et 102c situés respectivement sous la première et la seconde assise 101, 102 de sorte à être maintenue en ses quatre coins sur le plancher. En plus des piètements mentionnés plus haut, la banquette 100 comprend de préférence deux piètements centraux avant 101b et 102a situés respectivement sous la première et la seconde assise 101, 102 et un unique piètement central arrière 101 d situé sous la première assise 101.

Comme représenté sur la figure 3, le piètement central arrière 101 d est décalé transversalement vers l'intérieur de la première assise 101 par rapport audit premier piètement central avant 101 b de sorte que la distance L₁ entre le piètement latéral avant 101 a et le premier piètement central avant 101 b soit supérieure à la distance L₂ entre le piètement latéral arrière 101 c et le piètement central arrière 101 d. De cette manière, un espace de chargement de largeur L₄ supérieur à L₃, la largeur de la seconde assise, est libéré sous la seconde assise 102 et sous au moins une portion de la première assise 101 de sorte qu'une charge 50 plus large que la seconde assise peut être au moins partiellement logée sous la banquette 100 tout en gardant un pied arrière central assurant une résistance suffisante pour la reprise d'efforts au niveau d'un point d'attache de ceinture de sécurité (non représentées) de la banquette 100 situé entre les deux assises.

De plus, la figure 3 représente une première paroi de protection 110 en forme de L renversé reliant le piètement central arrière 101 d au premier piètement central avant 101b protégeant les éléments adjacents à la banquette ou situés sous la première assise 101, contre le ripage. En outre, une seconde paroi de protection 120 peut être agencée entre le second piètement central avant 102a et le piètement latéral avant 102b de sorte à fournir une protection contre le ripage pour les éléments situés devant la banquette 100, tels que les pieds d'un passager ou une planche de bord.

Il est également visible de la figure 3, que dans le cas où la seconde assise 102 est rabattue contre le dossier 103, comme illustré sur la figure 2, le premier piètement central avant 101b, du fait qu'il ne soit pas aligné longitudinalement avec le piètement central arrière 101 d, peut servir d'élément de retenu pour les objets volumineux tels que la charge 50 représentée, de sorte qu'ils ne ripent pas contre la planche de bord 30.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées, par exemple, les piètements ne sont nullement limités quant à leur forme ou leur nombre, de même que le nombre d'assise peut être supérieur à deux.

## Revendications

1. Banquette (100) pour véhicule comprenant une première assise (101) et une seconde assise (102) adjacentes, ladite banquette comprenant un piètement central arrière (101 d) procurant une résistance à un effort généré au niveau de points de ceintures de sécurité situés entre les deux assises, ledit piètement central arrière étant décalé transversalement pour libérer un espace de chargement plus large que la seconde assise, situé sous la seconde assise et au moins une portion de la première assise, **caractérisée en ce que** ladite banquette (100) comprend en outre un premier piètement central avant (101b) et **en ce que** ledit piètement central arrière (101 d) est décalé transversalement sous la première assise (101) par rapport audit premier piètement central avant de la banquette.

2. Banquette selon la revendication 1, **caractérisée en ce que** ledit piètement central arrière (101 d) décalé est relié audit premier piètement central avant (101 b) par une première paroi de protection (110).

3. Banquette selon la revendication 2, **caractérisée en ce que** la première paroi de protection (110) a la forme d'un L renversé.

4. Banquette selon l'une quelconque des revendications 2 ou 3, **caractérisée en ce que** la première paroi de protection (110) est composée de plusieurs parties et/ou est liée au plancher (40) et/ou directement à la banquette (100).

5. Banquette selon l'une quelconque des revendications 1 à 4, **caractérisée en ce que** ledit piètement central arrière (101 d) est décalé d'une distance telle qu'elle permet à un passager arrière de glisser un pied de chaque côté dudit piètement central arrière (101 d) de telle sorte que ses pieds puissent rester sous la première assise (101).

6. Banquette selon lune quelconque des revendications 1 à 5, **caractérisée en ce que** la banquette (100) comprend en outre un second piètement central avant (102a) situé sous le coin intérieur avant de ladite seconde assise (102), un second piètement latéral avant (102b) situé sous le coin extérieur avant de ladite seconde assise et un piètement latéral arrière (102c) situé sur le coin arrière extérieur de ladite seconde assise et **en ce que** la seconde assise est apte à être rabattue contre son dossier (103) de sorte que lorsque la seconde assise est en position rabattue, lesdits piètements avant (102a, 102b) situés sous la seconde assise sont escamotés contre une surface inférieure (102') de ladite seconde assise.

7. Banquette selon la revendication 6, **caractérisée en ce que** les piètements avant (102a, 102b) de ladite seconde assise (102) sont reliés par une seconde paroi de protection (120).

8. Banquette selon lune quelconque des revendications 1 à 7, **caractérisée en ce que** la première assise (101) est une assise intérieure de la banquette (100) et la seconde assise (102) est une assise extérieure de la banquette.

9. Véhicule comprenant une banquette selon l'une des revendications 1 à 8.

## Patentansprüche

1. Sitzbank (100) für ein Fahrzeug, umfassend eine erste Sitzfläche (101) und eine angrenzende zweite Sitzfläche (102), wobei die Sitzbank ein zentrales hinters Gestell (101d) umfasst, das einen Widerstand gegen eine Kraft bietet, die im Bereich von Punkten von Sicherheitsgurten, die sich zwischen den beiden Sitzflächen befinden, erzeugt wird, wobei das zentrale hintere Gestell quer versetzt ist, um einen größeren Laderaum als die zweite Sitzfläche freizugeben, der sich unter der zweiten Sitzfläche und zumindest einem Abschnitt der ersten Sitzfläche befindet, **dadurch gekennzeichnet, dass** die Sitzbank (100) ferner eine erstes zentrales vorderes Gestell (101b) umfasst, und dass das zentrale hintere Gestell (101d) quer unter der ersten Sitzfläche (101) in Bezug zum ersten zentralen vorderen Gestell der Sitzbank versetzt ist.

2. Sitzbank nach Anspruch 1, **dadurch gekennzeichnet, dass** das versetzte zentrale hintere Gestell (101d) mit dem ersten zentralen vorderen Gestell (101b) durch eine erste Schutzwand (110) verbunden ist.

3. Sitzbank nach Anspruch 2, **dadurch gekennzeichnet, dass** die erste Schutzwand (110) die Form eines umgekehrten L hat.

4. Sitzbank nach einem der Ansprüche 2 oder 3, **dadurch gekennzeichnet, dass** die erste Schutzwand (110) aus mehreren Teilen besteht und/oder mit dem Boden (40) und/oder direkt mit der Sitzbank (100) verbunden ist.

5. Sitzbank nach einem der Ansprüche 1 bis 4, **dadurch gekennzeichnet, dass** das erste zentrale hintere Gestell (101d) um einen derartigen Abstand versetzt ist, dass es einem hinteren Passagier möglich ist, einen Fuß auf jede Seite des zentralen hinteren Gestells (101d) zu schieben, so dass seine Füße unter der ersten Sitzfläche (101) bleiben können.

6. Sitzbank nach einem der Ansprüche 1 bis 5, **dadurch gekennzeichnet, dass** die Sitzbank (100) ferner ein zweites zentrales vorderes Gestell (102a), das sich unter der vorderen inneren Ecke der zweiten Sitzfläche (102) befindet, ein zweites seitliches vorderes Gestell (102b), das sich unter der äußeren vorderen Ecke der zweiten Sitzfläche befindet, und ein seitliches hinteres Gestell (102c) umfasst, das sich auf der äußeren hinteren Ecke der zweiten Sitzfläche befindet, und dass die zweite Sitzfläche geeignet ist, gegen ihre Rückenlehne (103) geklappt zu werden, so dass, wenn sich die zweite Sitzfläche in der eingeklappten Position befindet, die vorderen Gestelle (102a, 102b), die unter der zweiten Sitzfläche angeordnet sind, gegen eine Innenfläche (102') der zweiten Sitzfläche eingezogen werden.

7. Sitzbank nach Anspruch 6, **dadurch gekennzeichnet, dass** die vorderen Gestelle (102a, 102b) der zweiten Sitzfläche (102) durch eine zweite Schutzwand (120) verbunden sind.

8. Sitzbank nach einem der Ansprüche 1 bis 7, **dadurch gekennzeichnet, dass** die erste Sitzfläche (101) eine innere Sitzfläche der Sitzbank (100) ist, und die zweite Sitzfläche (102) eine äußere Sitzfläche der Sitzbank ist.

9. Fahrzeug, umfassend eine Sitzbank nach einem der Ansprüche 1 bis 8.

## Claims

1. A seat (100) for a vehicle, including a first seat portion (101) and a second seat portion (102) that are adjacent to one another, said seat including a rear central base (101d) providing resistance to a force generated at the safety belt points located between the two seat portions, said rear central base being transversely offset so as to clear a space for loading, which is wider than the second seat portion and which is located beneath the second seat portion and beneath at least part of the first seat portion, **characterized in that** said seat (100) further includes a first front central base (101b) and **in that** said rear central base (101d) is transversely offset beneath the first seat portion (101) with respect to said first front central base of the seat.

2. The seat according to Claim 1, **characterized in that** said offset rear central base (101d) is connected to said first front central base (101b) by a first protection wall (110).

3. The seat according to Claim 2, **characterized in that** the first protection wall (110) has the shape of an inverted L.

4. The seat according to any one of Claims 2 or 3, **characterized in that** the first protection wall (110) is composed of several parts and/or is linked to the floor (40) and/or directly to the seat (100).

5. The seat according to any one of Claims 1 to 4, **characterized in that** said rear central base (101d) is offset by a distance such that it permits a rear passenger to slide a foot on each side of said rear central base (101d) such that his feet can remain beneath the first seat portion (101).

6. The seat according to any one of Claims 1 to 5, **characterized in that** the seat (100) further includes a second front central base (102a) situated beneath the front inner corner of said second seat portion (102), a second front lateral base (102b) situated beneath the front outer corner of said second seat portion and a rear lateral base (102c) situated on the outer rear corner of said second seat portion and **in that** the second seat portion is able to be folded against its back (103) such that when the second seat portion is in folded position, said front bases (102a, 102b) situated beneath the second seat portion are retracted against a lower surface (102') of said second seat portion.

7. The seat according to Claim 6, **characterized in that** the front bases (102a, 102b) of said second seat portion (102) are connected by a second protection wall (120).

8. The seat according to any one of Claims 1 to 7, **characterized in that** the first seat portion (101) is an interior seat portion of the seat (100) and the second seat portion (102) is an exterior seat portion of the seat.

9. A vehicle including a seat according to one of Claims 1 to 8.
